# EUROPÄISCHE PATENTANMELDUNG

(11) **EP 2 458 665 A2**
(43) Veröffentlichungstag der Anmeldung: **30.05.2012**
(21) Anmeldenummer: 11190504.8
(22) Anmeldetag: 24.11.2011
(51) Int. Cl.: H01M 4/58, H01M 4/136, C01B 25/26

(54) **Verfahren zur Herstellung von Vorstufen für Übergangsmetallmischoxide**

(30) Priorität: 25.11.2010 EP 10192582
(71) Anmelder: BASF SE, 67056 Ludwigshafen (DE)
(72) Erfinder: Schulz-Dobrick, Martin, 68165 Mannheim (DE); Schrödle, Simon, 86609 Donauwörth (DE)

(57) **Zusammenfassung**

Verfahren zur Herstellung von Vorstufen für Übergangsmetallmischoxide, dadurch gekennzeichnet, dass man
(A) ein gegebenenfalls basisches Übergangsmetallcarbonat bei Temperaturen im Bereich von 200 bis 900°C thermisch behandelt,
(B) einmal oder mehrmals wäscht und
(C) danach trocknet.

## Beschreibung

Die vorliegende Erfindung betrifft ein Verfahren zur Herstellung von Vorstufen für Übergangsmetallmischoxide, dadurch gekennzeichnet, dass man
(A) ein gegebenenfalls basisches Übergangsmetallcarbonat bei Temperaturen im Bereich von 200 bis 900°C thermisch behandelt,
(B) einmal oder mehrmals wäscht und
(C) danach trocknet.

Energie zu speichern ist schon seit langer Zeit ein Gegenstand wachsenden Interesses. Elektrochemische Zellen, beispielsweise Batterien oder Akkumulatoren, können zur Speicherung von elektrischer Energie dienen. Besonderes Interesse genießen seit neuerer Zeit die sogenannten Lithium-Ionen-Batterien. Sie sind in einigen technischen Aspekten den herkömmlichen Batterien überlegen. So kann man mit ihnen Spannungen erzeugen, die mit Batterien auf der Grundlage von wässrigen Elektrolyten nicht zugänglich sind.

Dabei spielen die Materialien, aus denen die Elektroden gemacht werden, und dabei insbesondere das Material, aus dem die Kathode gemacht wird, eine wichtige Rolle.

In vielen Fällen verwendet man Lithium-haltige Übergangmetallmischoxide, insbesondere Lithium-haltige Nickel-Kobalt-Mangan-Oxide, die mit einem oder mehreren Übergangsmetallen dotiert sein können. Derartige Lithium-haltige Übergangmetallmischoxide macht man üblicherweise in einem Zweistufenverfahren, wobei man zunächst aus einer oder mehreren Lösungen von Übergangsmetallsalzen eine schwerlösliche Verbindung oder eine Mischung von mehreren schwerlöslichen Verbindungen ausfällt, die man jeweils auch als Vorstufe oder englisch als "Precursor" bezeichnet. Diese Vorstufe wird in einer zweiten Stufe thermisch behandelt, meist im Bereich von 600 bis 1000°C.

Ein Problem vieler Batterien sind jedoch die Zyklenbeständigkeit, die Hochstromfestigkeit und die Energiedichte, die jeweils noch zu verbessern sind.

Durch eigene Beobachtungen konnte gezeigt werden, dass die Wirkung des Elektrodenmaterials von verschiedenen Faktoren abhängt, die mit der Zusammensetzung des Übergangsmetallmischoxids und seiner Morphologie zu tun haben. Dabei beeinflusst das Herstellungsverfahren die Eigenschaften des Elektrodenmaterials, und zwar in vielen Fällen auch das Herstellungsverfahren von Vorstufen. Dabei können auch in Spuren anwesende Verunreinigungen eine Rolle spielen.

Während Dotierungen mit Übergangsmetallen gewünscht sein können, sind Verunreinigungen mit Natrium oder Kalium in vielen Fällen unerwünscht.

Aus US 2009/0194746 ist ein Verfahren bekannt, nach dem Nickel-, Mangan- und Kobalthaltige Vorstufen durch Ausfällen von gemischten Carbonaten mit bestimmter Stampfdichte (englisch: tap density), BET-Oberfläche und Partikelgröße erhalten wird. Das Verfahren beruht darauf, dass man mindestens drei verschiedene Lösungen miteinander vermischt: eine Lösung von Übergangsmetallsalzen, beispielsweise den Chloriden, eine Lösung von Metallcarbonaten, insbesondere Alkalimetallcarbonaten, und eine Lösung von Metallsalzen des Anions der Übergangsmetallsalze, also beispielsweise Alkalimetallchlorid. Man erhält Oxid- und Hydroxid-freie sphärische Carbonate von Nickel, Mangan und Kobalt. Nachteilig ist jedoch, dass das zusätzlich eingesetzte Alkalimetallsalz, beispielsweise das Alkalimetallchlorid, als Abfall anfällt und aufgearbeitet oder entsorgt werden muss.

Aus US 2009/0197173 ist ein Verfahren bekannt, Oxid- und Hydroxid-freie Carbonate von Nickel, Mangan und Kobalt zu machen, die eine hohe BET-Oberfläche aufweisen. Man mischt Lösungen von Nickel-, Kobalt- und Manganchlorid einerseits und Natriumhydrogencarbonat anderseits. Nachteilig ist jedoch die mäßige Löslichkeit von Natriumhydrogencarbonat, so dass man große Volumina an Natriumhydrogencarbonatlösung verarbeiten muss.

Aus US 2006/0121350 ist ein Verfahren bekannt, nach dem man Partikel herstellen kann, die ein Mischung von mehreren Carbonaten von Nickel, Mangan und Kobalt und einem weiteren Carbonat der Formel DCO₃ und einem Hydroxid der Formel D(OH) sind. Dazu geht man so vor, dass man Lösungen von Übergangsmetallsalzen und von Salzen von D mit Li₂CO₃ versetzt. Nachteilig an diesem Verfahren ist, dass Lithiumcarbonat ziemlich teuer ist und nur durch Aufarbeitung der Mutterlauge zurück gewonnen werden kann.

Es bestand also die Aufgabe, ein Verfahren bereit zu stellen, nach dem sich verbesserte Vorstufen für Übergangsmetallmischoxide und Elektrodenmaterialien herstellen lassen. Es bestand weiterhin die Aufgabe, verbesserte Elektroden und verbesserte elektrochemische Zellen bereit zu stellen.

Dementsprechend wurde das eingangs definierte Verfahren gefunden, im Rahmen der vorliegenden Erfindung auch kurz als erfindungsgemäßes Verfahren bezeichnet.

Das erfindungsgemäße Verfahren umfasst mindestens drei Schritte, kurz Schritte (A), (B) und (C) genannt.

In Schritt (A) geht man aus von gegebenenfalls basischem Übergangsmetallcarbonat. Darunter versteht man, dass man von Übergangsmetallcarbonat beispielsweise der Formel MCO₃ ausgehen kann, wobei M zweiwertige Kationen eines oder mehrerer Übergangsmetalle bezeichnet, vorzugsweise Ni, Mn, Co, Fe, Cu, Zn, Ti und/oder Cr, besonders bevorzugt Ni, Co und Mn. Bevorzugt geht man aus von Übergangsmetallcarbonat der Formel

M(CO₃)_{b}O_{c}(OH)_{d}AₘBₑ(SO₄)_{f}X_{g}(PO₄)ₕ (I),

in der die Variablen wie folgt definiert sind:
- M: ein oder mehrere Übergangsmetalle
- A: Natrium oder Kalium,
- B: ein oder mehrere Metalle der 1. bis 3. Gruppe des Periodensystems, wobei Natrium und Kalium ausgeschlossen sind,
- X: Halogenid, Nitrat oder Carboxylat,
- b: im Bereich von 0,75 bis 0,98,
- c: im Bereich von null bis 0,50
- d: im Bereich von null bis 0,50, wobei die Summe (c + d) im Bereich von 0,02 bis 0,50 liegt,
- e: im Bereich von null bis 0,1,
- f: im Bereich von null bis 0,05,
- g: im Bereich von null bis 0,05,
- h: im Bereich von null bis 0,10,
- m: im Bereich von 0,002 bis 0,1.

Gegebenenfalls basisches Übergangsmetallcarbonat kann wasserhaltig sein. Unter "wasserhaltig" wird im Rahmen der vorliegenden Erfindung verstanden, dass das Material einen Gehalt von chemisch oder physikalisch gebundenem Wasser im Bereich von 1 bis 50 Gew.-% aufweisen kann, bevorzugt 2 bis 20 Gew.-%. Dabei kann Wasser sowohl in das Kristallgitter des Materials der allgemeinen Formel (I) oder physikalisch an die Partikel gebunden sein. Insbesondere kann auch nach dem Trocknen des Materials, beispielsweise bei bis zu 105°C, noch Wasser enthalten sein. Beispiele für chemisch gebundenes Wasser sind Hydratkomplexe sowie temperaturlabile Hydroxide, die beispielsweise bei Temperaturen im Bereich von 50 bis 150°C an der Luft Wasser abspalten können. Im Rahmen der vorliegenden Erfindung wird jedoch gegebenenfalls anwesendes Wasser in der Formel (I) nicht berücksichtigt.

Schritt (A) führt man bei Temperaturen im Bereich von 200°C bis 900°C durch, bevorzugt sind 300 bis 600°C.

Schritt (A) kann man bei beliebigem Druck durchführen. Geeignet sind beispielsweise 1 bis 10 bar, bevorzugt ist Normaldruck.

Schritt (A) kann man kontinuierlich oder absatzweise durchführen.

Vorzugsweise stellt man vor Schritt (A) nicht die gewünschte Stöchiometrie von Lithium und den Übergangsmetallen des späteren Elektrodenmaterials ein, sondern gibt nur unterstöchiometrisch Lithiumverbindung oder - besonders bevorzugt - keine Lithiumverbindung zu gegebenenfalls basischem Übergangsmetallcarbonat.

Die thermische Behandlung in Schritt (A) kann man beispielsweise in einem Drehrohrofen, einem Pendelreaktor, einem Muffeloffen, einem Quarzkugelofen, einem diskontinuierlichen oder kontinuierlichen Kalzinationsofen oder in einem Durchschiebeofen durchführen.

Die thermische Behandlung gemäß Schritt (A) kann man beispielsweise in oxidierender Atmosphäre, in inerter oder in reduzierender Atmosphäre durchführen. Beispiele für eine oxidierende Atmosphäre ist Luft. Beispiele für inerte Atmosphäre sind Edelgas-, insbesondere Argonatmosphäre, Kohlendioxid- und Stickstoffatmosphäre. Beispiele für eine reduzierende Atmosphäre sind Stickstoff oder Edelgase, die 0,1 bis 10 Vol.-% Kohlenmonoxid oder Wasserstoff enthalten. Weitere Beispiele für eine reduzierende Atmosphäre sind Luft oder mit Stickstoff oder mit Kohlendioxid angereicherte Luft, die jeweils mehr mol-% Kohlenmonoxid enthalten als Sauerstoff. Bevorzugt führt man Schritt (A) an Luft durch.

Die Behandlungsdauer in Schritt (A) kann im Bereich von 5 Minuten bis 24 Stunden betragen.

Vorzugsweise enthält das Material nach der Behandlung gemäß Schritt (A) keine messbaren Anteile an physisobiertem Wasser mehr.

In einer Ausführungsform der vorliegenden Erfindung wählt man gegebenenfalls basisches Übergangsmetallcarbonat aus Material mit der Formel (I)

M(CO₃)_{b}O_{c}(OH)_{d}AₘBₑ(SO₄)_{f}X_{g}(PO₄)ₕ (I),

in der die Variablen wie folgt definiert sind:
- M: ein oder mehrere Übergangsmetalle, beispielsweise Ni, Mn, Co, Fe, Cu, Zn, Ti, Cr, bevorzugt zwei bis vier Übergangsmetalle, besonders bevorzugt drei Übergangsmetalle, insbesondere Kombinationen von Nickel, Mangan und Kobalt,
- A: Natrium oder Kalium,
- B: ein oder mehrere Metalle der 1. bis 3. Gruppe des Periodensystems, wobei Natrium und Kalium ausgeschlossen sind. Zu nennen sind vorzugsweise Cäsium, Rubidium und besonders bevorzugt Lithium, Magnesium, Calcium und Aluminium sowie Mischungen von zwei oder mehr der vorstehend genannten Elemente,
- X: Halogenid, beispielsweise Bromid, bevorzugt Chlorid, besonders bevorzugt Fluorid, weiterhin Nitrat oder Carboxylat, bevorzugt C₁-C₇-Carboxylat, insbesondere Benzoat oder Acetat,
- b: im Bereich von 0,75 bis 0,98,
- c: im Bereich von null bis 0,50, bevorzugt bis 0,30,
- d: im Bereich von null bis 0,50, bevorzugt bis 0,30, wobei die Summe (c + d) im Bereich von 0,02 bis 0,50 liegt, bevorzugt bis 0,30,
- e: im Bereich von null bis 0,1, bevorzugt bis 0,05,
- f: im Bereich von null bis 0,05,
- g: im Bereich von null bis 0,05,
- h: im Bereich von null bis 0,10, bevorzugt bis 0,05,
- m: im Bereich von 0,002 bis 0,1, bevorzugt bis 0,05,

In einer Ausführungsform der vorliegenden Erfindung wählt man M aus mindestens zwei Übergangsmetallen, gewählt aus Ni, Mn, Co, Fe, Cu, Zn, Ti und Cr. Ganz besonders bevorzugt wählt man M als Kombinationen von Ni, Mn und Co.

In einer Ausführungsform der vorliegenden Erfindung sind 55 bis 85 mol-% von M als Mn gewählt, d. h., man wählt M so, dass 55 bis 85 mol-% von M Mangan sind, der Rest ist gewählt aus einem oder mehr anderen Übergangsmetallen, bevorzugt aus Ni, Co, Fe, Cu, Zn, Ti und/oder Cr und besonders bevorzugt als Kombination von Ni und Co.

Zur Herstellung von gegebenenfalls basischem Übergangsmetallcarbonat kann man von einer wässrigen Lösung ausgehen, die wasserlösliches Salz von Übergangsmetall M oder wasserlösliche Salze von Übergangsmetall(en) M und gegebenenfalls A und B enthält. Eine derartige Lösung wird im Rahmen der vorliegenden Erfindung auch als "wässrige Lösung von Übergangsmetallsalze(en)" bezeichnet. Wasserlösliche Salze von M, insbesondere von Nickel, Kobalt und Mangan, sind beispielsweise Carbonsäuresalze, insbesondere Acetate, von Übergangsmetall M, weiterhin Sulfate, Nitrate, Halogenide, insbesondere Bromide oder Chloride, von Übergangsmetall M, wobei M vorzugsweise in der Oxidationsstufe +2 vorliegt.

Wünscht man ein gegebenenfalls basisches Übergangsmetallcarbonat einzusetzen, das mehrere Übergangsmetalle M aufweist, so kann man von einer wässrigen Lösung ausgehen, die zwei oder mehr Gegenionen als Anionen aufweist, beispielsweise indem man eine wässrige Lösung von Kobaltchlorid, Nickelchlorid und Manganacetat einsetzt. In einer anderen Variante setzt man Salze von mehreren Übergangsmetallen mit jeweils gleichen Gegenionen ein.

Wässrige Lösung von Übergangsmetallsalz(en) kann eine Gesamtkonzentration von M im Bereich von 0,01 bis 5 mol/l, bevorzugt 1 bis 3 mol/l aufweisen.

In einer Ausführungsform der vorliegenden Erfindung sind die Variablen f, g und h in Formel (I) dadurch bestimmt, welche Übergangsmetallsalze man in wässriger Lösung von Übergangsmetall(en) einsetzt. So ist es beispielsweise in dem Fall möglich, wenn man lediglich die Sulfate von Mangan, Kobalt, Nickel und gegebenenfalls einem oder mehreren weiteren Übergangsmetallen M zur Bereitung von wässriger Lösung von Übergangmetall(en) eingesetzt hat, dass f größer ist als null und bis zu 0,05 beträgt, g und h aber null sind.

Das Ausfällen von gegebenenfalls basischem Übergangsmetallcarbonat kann man vorzugsweise dadurch bewirken, dass man wässrige Lösung von Übergangsmetallsalze(en) in einem oder mehreren Schritten mit wässriger Lösung von einem oder mehreren Alkalimetallcarbonat vereint, beispielsweise durch Zugabe von Lösung von Alkalimetallcarbonat zu wässriger Lösung von Übergangsmetallsalze(en). Besonders bevorzugte Alkalimetallcarbonate sind Natriumcarbonat und Kaliumcarbonat.

In einer Ausführungsform der vorliegenden Erfindung bewirkt man die Fällung durch Zugabe einer wässrigen Lösung von Natriumcarbonat oder Kaliumcarbonat zu einer wässrigen Lösung von Acetaten, Sulfaten oder Nitraten von Übergangsmetall(en) M.

Nach der Fällung wird wasserhaltiges gegebenenfalls basisches Übergangsmetallcarbonat in der Regel von der Mutterlauge abgetrennt. Danach kann man waschen und bei Temperaturen von 20 bis 150°C trocknen. Als Mutterlauge werden dabei Wasser, wasserlösliche Salze sowie gegebenenfalls weitere, sich in Lösung befindliche Additive bezeichnet. Als wasserlösliche Salze kommen beispielsweise Alkalimetallsalze der Gegenionen von Übergangsmetall M in Frage, beispielsweise Natriumacetat, Kaliumacetat, Natriumsulfat, Kaliumsulfat, Natriumnitrat, Kaliumnitrat, Natriumhalogenid, insbesondere Natriumchlorid, Kaliumhalogenid, weiterhin zusätzliche Salze, gegebenenfalls eingesetzte Additive, sowie gegebenenfalls überschüssiges Alkalimetallcarbonat.

Das Abtrennen kann beispielsweise durch Filtrieren, Zentrifugieren, Dekantieren oder Sprühtrocknen erfolgen oder durch eine Kombination von zwei oder mehr der vorstehend genannten Operationen. Als Vorrichtungen sind beispielsweise Filterpressen, Bandfilter, Hydrozyklone, Schrägklärapparate oder Kombination der vorstehend genannten Vorrichtungen geeignet.

In einer Ausführungsform der vorliegenden Erfindung liegt gegebenenfalls basisches Übergangsmetallcarbonat in Form von sphärischen Partikeln vor. Darunter soll verstanden werden, dass die Partikel im Wesentlichen kugelförmig sind.

Unter "im Wesentlichen kugelförmig" werden dabei beispielsweise auch solche nicht streng kugelförmigen Partikel subsumiert, beispielsweise ellipsoide Partikel, bei denen die größte Halbachse und die kürzeste Halbachse sich um maximal 10% unterscheiden. Die Morphologie von gegebenenfalls basischem Übergangsmetallcarbonat lässt sich durch Mikroskopie bestimmen, beispielsweise durch Lichtmikroskopie oder Rasterelektronenmikroskopie.

Unter im "Wesentlichen kugelförmig" werden dabei auch solche Proben von nicht streng kugelförmigen Partikeln subsumiert, bei denen in einer repräsentativen Probe mindestens 95% (Gewichtsmittel) der Partikel eine im Wesentlichen kugelförmige Gestalt aufweist.

In einer Ausführungsform der vorliegenden Erfindung liegt der Partikeldurchmesser (D50) von wasserhaltigem Material im Bereich von 2 bis 50 µm. Dabei bezeichnet Partikeldurchmesser (D50) im Rahmen der vorliegenden Erfindung den mittleren Partikeldurchmesser (Gewichtsmittel), wie er beispielsweise durch Lichtstreuung ermittelt werden kann.

In Schritt (B) des erfindungsgemäßen Verfahrens wäscht man.

Man kann beispielsweise mit Wasser waschen. In Varianten kann man mit Alkohol-WasserGemisch waschen, beispielsweise Ethanol-Wasser-Gemischen oder Isopropanol-Wasser-Gemischen. Bevorzugt ist es, mit Wasser zu waschen, das keine Anteile an Alkohol enthält.

Die Effizienz der Waschschritte kann man durch analytische Maßnahmen überprüfen. So kann man beispielsweise den Gehalt an Übergangsmetall(en) M im Waschwasser analysieren.

Im Falle, dass man mit Wasser wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

An Schritt (B) schließt man einen oder mehrere Trocknungsschritt(e) (C) an. Trocknungsschritt(e) (C) kann man bei Zimmertemperatur oder bei erhöhter Temperatur durchführen. Beispielsweise kann man bei Temperaturen im Bereich von 30 bis 150°C trocknen.

Trocknungsschritt(e) (C) kann man bei Normaldruck oder bei reduziertem Druck durchführen, beispielsweise bei einem Druck im Bereich von 10 mbar bis 500 mbar.

Wassergehalt und Partikeldurchmesser von Vorstufe von Übergangsmetallmischoxid bestimmt man nach Schritt (C).

Erfindungsgemäß hergestellte Materialien lassen sich gut zu Übergangmetallmischoxiden verarbeiten, die man zur Herstellung von Elektroden von Lithium-Ionen-Batterien verwenden kann. Ein weiterer Gegenstand der vorliegenden Erfindung ist die Verwendung von erfindungsgemäß hergestellten Materialien zur Herstellung von Übergangsmetallmischoxiden. Ein weiterer Gegenstand die ein Verfahren zur Herstellung von Übergangsmetallmischoxiden unter Verwendung von erfindungsgemäßen Materialien.

Zur Herstellung von Übergangsmetallmischoxiden kann man so gehen, dass man eine Mischung von mindestens einem erfindungsgemäß hergestellten Material und mindestens einer Lithiumverbindung bei Temperaturen im Bereich von 600 bis 1000°C thermisch behandelt.

Als Lithiumverbindungen sind beispielsweise metallorganische und bevorzugt anorganische Lithiumverbindungen geeignet. Besonders bevorzugte anorganische Lithiumverbindungen sind gewählt aus LiOH, Li₂CO₃, Li₂O und LiNO₃ sowie entsprechende Hydrate, beispielsweise LiOH-H₂O. Zum Vermischen kann man beispielsweise so vorgehen, dass man erfindungsgemäßes Material mit Lithiumverbindung in einem Feststoffmischer vermischt.

In einer Ausführungsform der vorliegenden Erfindung stellt man in der Mischung von erfindungsgemäßem Material und Lithiumverbindung die Stöchiometrie von Übergangsmetallmischoxid ein, und zwar so, dass das molare Verhältnis von Lithium zur Summe der Übergangsmetalle im Bereich von 0,9 bis 1,6, bevorzugt von 1 bis 1,25 und besonders bevorzugt bis 1,1 liegt. In einer anderen Ausführungsform stellt man die Stöchiometrie so ein, dass das molare Verhältnis von Lithium zur Summe der Übergangsmetalle etwa 0,5 beträgt, beispielsweise kann sie im Bereich von 0,4 bis 0,6 liegen.

Erfindungsgemäß hergestellte Übergangsmetallmischoxide, kurz auch Übergangsmetallmischoxid genannt, sind sehr gut zu verarbeiten, beispielsweise aufgrund ihrer guten Rieselfähigkeit, und zeigen eine sehr gute Zyklenstabilität, wenn man elektrochemische Zellen herstellt unter Verwendung von erfindungsgemäß hergestelltem Übergangsmetallmischoxid.

Zur Herstellung von erfindungsgemäßen Elektroden kann man so vorgehen, dass man Übergangsmetallmischoxid zunächst zu Elektrodenmaterial verarbeitet.

Elektrodenmaterial kann neben Übergangsmetallmischoxid weiterhin Kohlenstoff in elektrisch leitfähiger Modifikation enthalten, beispielsweise als Ruß, Graphit, Graphen, Kohlenstoffnanoröhren oder Aktivkohle.

Elektrodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoffnanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von erfindungsgemäßem modifiziertem Übergangsmetallmischoxid und elektrisch leitfähigem, kohlenstoffhaltigem Material im Bereich von im Bereich von 200:1 bis 5:1, bevorzugt 100:1 bis 10:1.

Ein weiterer Aspekt der vorliegenden Erfindung ist eine Elektrode, enthaltend mindestens ein wie vorstehend hergestelltes Übergangsmetallmischoxid, mindestens ein elektrisch leitfähiges, kohlenstoffhaltiges Material und mindestens ein Bindemittel.

Übergangsmetallmischoxid und elektrisch leitfähiges, kohlenstoffhaltiges Material sind vorstehend beschrieben.

Ein weiterer Gegenstand der vorliegenden Erfindung sind elektrochemische Zellen, hergestellt unter Verwendung von mindestens einer erfindungsgemäßen Elektrode. Ein weiterer Gegenstand der vorliegenden Erfindung sind elektrochemische Zellen, enthaltend mindestens eine erfindungsgemäße Elektrode.

In einer Ausführungsform der vorliegenden Erfindung enthält erfindungsgemäß hergestelltes Elektrodenmaterial:
im Bereich von 60 bis 98 Gew.-%, bevorzugt 70 bis 96 Gew.-% Übergangsmetallmischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von erfindungsgemäßen Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemä-βen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 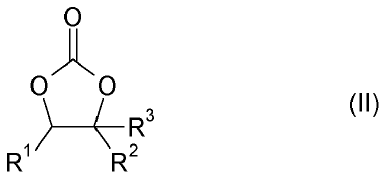 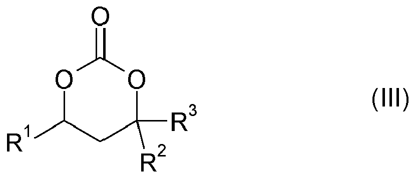 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R⁷ und R⁸ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (IV).

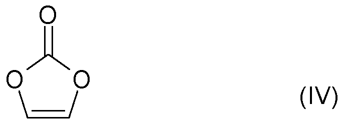

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei t wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemä-βen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

Allgemeine Bemerkungen:
Mengenangaben von gelösten Salzen beziehen sich auf kg Lösung.
Der Massenanteil von Ni, Co, Mn und Na wurde über induktiv gekoppelte Plasma-Atomemissionsspektroskopie (ICP-AES) bestimmt. Der Massenanteil von CO₃²⁻ wurde bestimmt über Behandlung mit Phosphorsäure und Messung des entstehenden CO₂ durch IR-Spektroskopie. Der Massenanteil von SO₄²⁻ wurde mittels Ionenchromatographie bestimmt.

Nur Suspension, welche nach dem Verstreichen von mindestens dem sechsfachen der Verweilzeit TV gewonnen wurde, wurde zur Aufarbeitung bzw. zu analytischen Zwecken eingesetzt.

### I. Herstellung von Übergangsmetallcarbonaten

### 1.1 Herstellung von Material (I.1)

Man setzte die folgenden Lösungen an:
Lösung (a.1): Durch Lösen von 0,363 mol/kg Nickelsulfat, 0,198 mol/kg Kobaltsulfat und 1,089 mol/kg Mangan(II)sulfat in Wasser wurde eine wässrige Lösung von Übergangsmetallsalzen hergestellt. Die Gesamtübergangsmetallkonzentration von Lösung (a.1) betrug 1,650 mol/kg.
   ρ _{a 1} = 1,3 g/ml
   Lösung (b.1): 1,30 mol/kg Natriumcarbonat und 0,09 mol/kg Ammoniumhydrogencarbonat in Wasser. ρ_{b 1} = 1,15 g/ml

In einer kontinuierlich betriebenen Fällungsapparatur wurde unter Stickstoffatmosphäre 1,5 l Wasser vorgelegt und bei 55°C unter Rühren (1500 Umdrehungen pro Minute) simultan Lösung (a.1) mit der konstanten Pumprate PR_{a 1} und Lösung (b.1) mit der konstanten Pumprate PR_{b 1} zugepumpt. Die Pumpraten waren PR_{a 1} = 235 g/h und PR_{b 1} = 285 g/h. Dabei fiel Material der Formel (1.1) aus, und in der Fällungsapparatur bildete sich eine Suspension.

Mit Hilfe eines Überlaufs wurde kontinuierlich so viel Suspension aus der Apparatur entnommen, so dass sich beim Betrieb der Fällungsapparatur in dieser ein in etwa konstantes Volumen an Suspension einstellte. Bei der verwendeten Fällungsapparatur betrug Volumen V 1,6 Liter. Mit Hilfe von V ließ sich die mittlere Verweilzeit TV berechnen als TV = V / (PR_{a 1}/ρ_{a 1}+PR_{b 1}/ρ_{b 1}) mit ρ_{a 1} und ρ_{b 1} als den Dichten der Lösungen (a.1) bzw. (b.1). TV betrug 3,7 Stunden.

### Weitere Aufarbeitung der Suspension

Die Suspension wurde filtriert und der Niederschlag abgetrennt und mit destilliertem Wasser gewaschen, bis die elektrische Leitfähigkeit des Waschwassers 0,10 mS betrug. Der Feststoff wurde im Trockenschrank bei 105°C über Nacht getrocknet. Der Feststoff wurde über ein Sieb mit Maschengröße 50 µm gesiebt.

Man erhielt ausgefälltes Material (1.1).

**Tabelle 1: Herstellung und analytische Daten von Material (1.1)**

| c[Ni] | c[Co] | c[Mn] | c[SO₄²⁻] | c[Na] | c[CO₃²⁻] | Molverhältnis |
|---|---|---|---|---|---|---|
| | | | | | | CO₃²⁻ / (Ni+Co+Mn) |
| 10,8 | 5,5 | 31 | 0,08 | 0,36 | 42,0 | 0,83 |

| | | | | | | |
|---|---|---|---|---|---|---|
| Dabei bedeutet c stets die Konzentration im Material (l.1) und wird in Gew.-% angegeben. | | | | | | |

### 1.2 Herstellung von Material (1.2)

Lösung (a.2): Durch Lösen von 0,396 mol/kg Nickelsulfat und 1,254 mol/kg Mangan(II)sulfat in Wasser wurde eine wässrige Lösung von Übergangsmetallsalzen hergestellt. Die Gesamtübergangsmetallkonzentration von Lösung (a.2) betrug 1,650 mol/kg.
ρ _{a.2} = 1,3 g/ml

Man ging im Wesentlichen vor wie unter 1.1 beschrieben, setzte jedoch die Lösung (a.2) ein und wählte folgende Pumpraten: PR_{a.2} = 235 g/h und PR_{b.1} = 286 g/h. Mittlere Verweilzeit TV: 3,7 h.

Man erhielt ausgefälltes Material (1.2).

**Tabelle 2: Zusammensetzung von Material (1.2)**

| c[Ni] | c[Mn] | c[SO₄²⁻] | c[Na] | c[CO₃²⁻] | Molverhältnis |
|---|---|---|---|---|---|
| | | | | | CO₃²⁻ / (Ni+Co+Mn) |
| 11,8 | 34 | 0,07 | 0,30 | 43,0 | 0,87 |

| | | | | | |
|---|---|---|---|---|---|
| Dabei bedeutet c stets die Konzentration im Material (1.2) und wird in Gew.-% angegeben. | | | | | |

### II. Thermische Behandlung nach Schritt (B)

### 11.1 Thermische Behandlung von Material (1.1)

Ein Anteil von je 100 g des aus I.1 erhaltenen Materials wurde ohne weitere Zutaten in einem Drehkugelofen auf eine Temperatur gemäß Tabelle 2 erhitzt und zwei Stunden bei der betreffenden Temperatur thermisch behandelt. Danach wurde mit drei Mal mit je 500 ml Wasser gewaschen. Anschließend wurde der so erhältliche Feststoff bei 105°C im Trockenschrank über einen Zeitraum von 12 Stunden getrocknet. Man erhielt 66 g erfindungsgemäß hergestellte Vorstufe (II.1). Die analytischen Daten sind in Tabelle 3 festgehalten.

**Tabelle 3: Analytische Daten von erfindungsgemäß hergestellten Vorstufen**

| Vorstufe | Behandlungstemperatur [°C] | Na (nach Waschen) [Gew.-%] |
|---|---|---|
| (II.1 - 350) | 350 | 0,15 |
| (II.1 - 400) | 400 | 0,03 |
| (II.1 - 450) | 450 | 0,06 |
| (II.1 - 500) | 500 | 0,02 |
| (II.1 - 550) | 550 | 0,03 |
| (II.1 - 600) | 600 | 0,03 |

| | | |
|---|---|---|
| Zum Vergleich wurde das Material nach 1.1 bei 500°C kalziniert, aber nicht mit Wasser gewaschen. Der Na-Gehalt betrug 0.5 % | | |

Zum Vergleich wurde 1000 g des nach 1.1 erhaltenen Materials ohne weitere Zutaten in einem Trockenschrank auf 120°C erhitzt und zwölf Stunden bei 120°C getrocknet. Man erhielt 990 g Vergleichsvorstufe.

### II.2 Thermische Behandlung von Material (1.2)

Ein Anteil von 100 g des aus 1.2 erhaltenen Materials wurde ohne weitere Zutaten in einem Drehkugelofen auf eine Temperatur von 475°C erhitzt und zwei Stunden bei der betreffenden Temperatur thermisch behandelt. Danach wurde mit drei Mal mit je 500 ml Wasser gewaschen. Anschließend wurde der so erhältliche Feststoff bei 105°C im Trockenschrank über einen Zeitraum von 12 Stunden getrocknet. Man erhielt 66 g erfindungsgemäß hergestellte Vorstufe (11.2). Der Na-Gehalt betrug 0,04%.

### III. Herstellung von Übergangsmetallmischoxiden

### III.1 Herstellung von Übergangsmetallmischoxid III.1

Erfindungsgemäße Vorstufe (11.1 - 550) wurde mit Li₂CO₃ gemischt (Molverhältnis Li : Ni : Co : Mn wie 1,5 : 0,22 : 0,11 : 0,67) und in einem Muffelofen bei 900°C für 6 Stunden kalziniert. Man erhielt Übergangsmetallmischoxid III.1 aus der Vorstufe. Übergangsmetallmischoxid III.1 wies eine Schichtstruktur auf.

### II.2 Herstellung von Übergangsmetallmischoxid III.2

Erfindungsgemäße Vorstufe (11.2) wurde mit Li₂CO₃ gemischt (Molverhältnis Li : Ni : Mn wie 0,5 : 0,25 : 0,75) und in einem Muffelofen bei 900°C für 6 Stunden kalziniert. Man erhielt Übergangsmetallmischoxid III.2 aus der Vorstufe. Übergangsmetallmischoxid III.2 wies eine Spinellstruktur auf.

### III. Allgemeine Vorschrift zur Herstellung von Elektroden und Testzellen

Eingesetzte Materialien:
Elektrisch leitfähige, kohlenstoffhaltige Materialien:
   Kohlenstoff (C-1): Ruß, BET-Oberfläche von 62 m²/g, kommerziell erhältlich als "Super P Li" der Firma Timcal

Bindemittel (BM.1): Copolymer von Vinylidenfluorid und Hexafluoropropen, als Pulver, kommerziell erhältlich als Kynar Flex® 2801 der Fa. Arkema, Inc.

Angaben in % beziehen sich auf Gewichtsprozent, wenn nicht ausdrücklich anders angegeben.

Zur Bestimmung der elektrochemischen Daten der Materialien wurden 8 g erfindungsgemäßes Übergangsmetallmischoxid III.2, 1 g Kohlenstoff (C-1) und 1 g (BM.1) unter Zusatz von 24 g N-Methylpyrrolidon (NMP) zu einer Paste vermischt. Man beschichtete eine 30 µm dicke Aluminiumfolie mit der vorstehend beschriebenen Paste (Aktivmaterialbeladung 5-7 mg/cm²). Nach Trocknung bei 105°C wurden kreisförmige Teile der so beschichteten Aluminiumfolie (Durchmesser 20 mm) ausgestanzt. Aus den so erhältlichen Elektroden stellte man elektrochemische Zellen her.

Nach Trocknung bei 105°C wurden kreisförmige Elektroden (Durchmesser 20 mm) ausgestanzt und zu Testzellen verbaut. Als Elektrolyt wurde eine 1 mol/l Lösung von LiPF₆ in Ethylencarbonat/Dimethylcarbonat (1:1 bezogen auf Massenanteile) eingesetzt. Die Anode der Testzellen bestand aus einer Lithiumfolie, die über einen Separator aus Glasfaserpapier zur Kathodenfolie in Kontakt stand.

Man erhielt erfindungsgemäße elektrochemische Zellen EZ.2.

Die erfindungsgemäßen elektrochemischen Zellen EZ.2 wurden zwischen 4.9 V und 3.5 V bei 25°C in 100 Zyklen zyklisiert (geladen/entladen). Die Lade- und Entladeströme betrugen 150 mA/g Kathodenmaterial. Die erfindungsgemäßen elektrochemischen Zellen hatten nach 100 Zyklen eine Entladekapazität von 135 mAh/g.

## Patentansprüche

1. Verfahren zur Herstellung von Vorstufen für Elektrodenmaterialien, **dadurch gekennzeichnet, dass** man
(A) ein gegebenenfalls basisches Übergangsmetallcarbonat bei Temperaturen im Bereich von 200 bis 900°C thermisch behandelt,
(B) einmal oder mehrmals wäscht und
(C) danach trocknet.

2. Verfahren nach Anspruch 1, **dadurch gekennzeichnet, dass** man gegebenenfalls basisches Übergangsmetallcarbonat wählt aus Material mit der Formel (I)
M(CO₃)_{b}O_{c}(OH)_{d}AₘBₑ(SO₄)_{f}X_{g}(PO₄)ₕ (I),
in der die Variablen wie folgt definiert sind:
M ein oder mehrere Übergangsmetalle
A Natrium oder Kalium,
B ein oder mehrere Metalle der 1. bis 3. Gruppe des Periodensystems, wobei Na und Kalium ausgeschlossen sind,
X Halogenid, Nitrat oder Carboxylat,
b im Bereich von 0,75 bis 0,98,
c im Bereich von null bis 0,50
d im Bereich von null bis 0,50,
wobei die Summe (c + d) im Bereich von 0,02 bis 0,50 liegt,
e im Bereich von null bis 0,1,
f im Bereich von null bis 0,05,
g im Bereich von null bis 0,05,
h im Bereich von null bis 0,10,
m im Bereich von 0,002 bis 0,1.

3. Verfahren nach Anspruch 1 oder 2, **dadurch gekennzeichnet, dass** man X wählt aus F.

4. Verfahren nach einem der Ansprüche 1 bis 3, **dadurch gekennzeichnet, dass** man M wählt aus mindestens zwei Übergangsmetallen, die gewählt sind aus Ni, Mn, Co, Fe, Zn, Cr und Ti.

5. Verfahren nach einem der Ansprüche 1 bis 4, **dadurch gekennzeichnet, dass** man B wählt aus Li, Rb, Cs, Mg, Ca, Al und Mischungen von zwei oder mehr der vorstehend genannten Elemente der Hauptgruppen 1 bis 3 des Periodensystems der Elemente.

6. Verfahren nach einem der Ansprüche 1 bis 5, **dadurch gekennzeichnet, dass** der Partikeldurchmesser (D50) im Bereich von 2 bis 50 µm liegt.

7. Verfahren nach einem der Ansprüche 1 bis 6, **dadurch gekennzeichnet, dass** man M wählt aus Ni, Co und Mn.

8. Verfahren nach einem der Ansprüche 1 bis 7, **dadurch gekennzeichnet, dass** man Material der allgemeinen Formel (I) ausfällt durch Zugabe einer wässrigen Lösung von Natriumcarbonat oder Kaliumcarbonat zu einer wässrigen Lösung von Acetaten, Sulfaten oder Nitraten von M.

9. Verfahren nach einem der Ansprüche 1 bis 8, **dadurch gekennzeichnet, dass** Material der allgemeinen Formel (I) in Form von sphärischen Partikeln vorliegt.

10. Verfahren nach einem der Ansprüche 1 bis 9, **dadurch gekennzeichnet, dass** 55 bis 85 mol-% von M als Mn gewählt sind.

11. Vorstufe, erhältlich nach einem Verfahren nach einem der Ansprüche 1 bis 10.

12. Verwendung von Vorstufe, hergestellt nach einem Verfahren nach einem der Ansprüche 1 bis 10, zur Herstellung von Elektrodenmaterialien für Lithium-Ionen-Batterien.
